# EUROPEAN PATENT APPLICATION

(11) **EP 4 130 481 A1**
(43) Date of publication of application: **08.02.2023**
(21) Application number: 21779483.3
(22) Date of filing: 11.03.2021
(51) Int. Cl.: F04D 19/04

(54) **VACUUM PUMP AND VACUUM PUMP PIPING STRUCTURE**

(30) Priority: 31.03.2020 JP 2020063016
(71) Applicant: Edwards Japan Limited, Yachiyo-shi, Chiba 276-8523 (JP)
(72) Inventor: NAKATSUJI, Shigeyoshi, Yachiyo-shi Chiba 276-8523 (JP); SAKAGUCHI, Yoshiyuki, Yachiyo-shi Chiba 276-8523 (JP); KAWAGUCHI, Yota, Yachiyo-shi Chiba 276-8523 (JP)
(74) Representative: Openshaw & Co.
(86) International application number: PCT/JP2021/009921
(87) International publication number: WO 2021/200022

(57) **Abstract**

A vacuum pump and a piping structural portion for a vacuum pump are provided that limit damage to a component connected to external piping and limit gas leakage even when the vacuum pump is displaced in a rotation direction due to damage to the vacuum pump. The vacuum pump draws in gas through an inlet port by rotation of a rotor and includes a casing, which rotatably houses the rotor, and a piping structural portion disposed in the casing. At least a part of the piping structural portion includes an elastic portion that is configured to elastically deform to absorb a displacement.

## Description

The present invention relates to a vacuum pump and a piping structural portion for a vacuum pump.

Apparatuses such as semiconductor manufacturing apparatuses, liquid crystal manufacturing apparatuses, electron microscopes, surface analysis apparatuses, and microfabrication apparatuses require internal environments thereof to be at a high degree of vacuum. Vacuum pumps are used to produce a high degree of vacuum in such apparatuses. Vacuum pumps rotate rotor blades relative to stator blades to exhaust gas to the outside and maintain a high vacuum in the apparatuses described above.

A vacuum pump may suffer trouble during operation, causing the rotor rotating at high speed to collide with a fixed member that is not rotating, such as a stator. In this case, momentum of the rotor is transmitted to the fixed member, instantaneously producing torque that rotates the entire vacuum pump in the rotation direction of the rotor. The excessive torque that is instantaneously produced exerts large stress on a vacuum vessel through a flange. In this respect, Japanese Patent No. 4484470 discloses a vacuum pump that includes a thin section in the flange forming the inlet port. The thin section can plastically deform to absorb part of an excessive torque energy.

Although the vacuum pump described in Japanese Patent No. 4484470 can absorb a displacement at an inlet port side, it cannot absorb a displacement occurring in the piping other than the inlet port. For example, piping that forms an outlet port, purge port, or vent port may become misaligned with the external piping due to a deviation of the vacuum pump in the rotation direction, thereby causing internal gas leakage.

To solve the above problem, it is an object of the present invention to provide a vacuum pump and a piping structural portion for a vacuum pump that limit damage to a component connected to external piping and limit gas leakage even when the vacuum pump is displaced in a rotation direction due to damage to the vacuum pump.

To achieve the above object, a vacuum pump according to the present invention is configured to draw in gas through an inlet port by rotation of a rotor and includes a casing that rotatably houses the rotor and a piping structural portion disposed in the casing, wherein at least a part of the piping structural portion includes an elastic portion that is configured to elastically deform to absorb a displacement.

In the vacuum pump configured as described above, when a positional deviation occurs due to damage during operation, the elastic portion elastically deforms to limit a positional deviation of the section of the piping structural portion connected to external piping. This limits damage to the component connecting the piping structural portion to the external piping and limits leakage of the gas flowing in the piping structural portion.

A direction, in which the piping structural portion extends from the casing, may have a directional component in a radial direction of the rotor. When the piping structural portion does not have an elastic portion, a deviation of the vacuum pump in the rotation direction tends to cause a positional deviation of the section of the piping structural portion connected to the external piping. In contrast, the piping structural portion that has an elastic portion can effectively limit a positional deviation of the section of the piping structural portion connected to the external piping.

A direction, in which the piping structural portion extends from the casing, may have a directional component in an axial direction of the rotor, and the piping structural portion may have an axial center that is offset from an axial center of the rotor in a radial direction. When the piping structural portion does not have an elastic portion, a deviation of the vacuum pump in the rotation direction tends to cause a positional deviation of the section of the piping structural portion connected to the external piping. In contrast, the piping structural portion that has an elastic portion can effectively limit a positional deviation of the section of the piping structural portion connected to the external piping.

The piping structural portion may have a bellows structure. The bellows structure effectively limits a positional deviation of the section of the piping structural portion connected to the external piping and effectively limits leakage of the gas flowing in the piping structural portion.

The elastic portion may be constituted of an elastic component formed of an elastic member and be placed to be sandwiched between piping provided in the piping structural portion and the casing. Accordingly, the elastic component effectively limits a positional deviation of the section of the piping structural portion connected to the external piping and effectively limits leakage of the gas flowing in the piping structural portion.

The piping structural portion may be an outlet port. Accordingly, the piping structural portion, which is elastically deformable, can effectively limit leakage of the exhaust gas flowing through the piping structural portion, which is the outlet port.

The piping structural portion may be a purge port. Accordingly, the piping structural portion, which is elastically deformable, can effectively limit the leakage of purge gas flowing through the piping structural portion, which is the purge port.

To achieve the above object, a piping structural portion for a vacuum pump according to the present invention is configured to be placed in a casing of the vacuum pump so as to be connected to external piping, wherein at least a part of the piping structural portion includes an elastic portion configured to elastically deform to absorb a displacement.

In the piping structural portion configured as described above, even when the vacuum pump is displaced in the rotation direction due to damage to the vacuum pump, the elastic portion deforms to limit a positional deviation of the section of the piping structural portion connected to the external piping. This limits damage to the component connecting the piping structural portion to the external piping and limits leakage of the gas flowing in the piping structural portion.

The piping structural portion may have a bellows structure. The bellows structure effectively limits a positional deviation of the section of the piping structural portion connected to the external piping and effectively limits leakage of the gas flowing in the piping structural portion.

The piping structural portion may include piping and an elastic component formed of an elastic member that is placeable at one end in a direction of a flow passage of the piping. Accordingly, the elastic component effectively limits a positional deviation of the section of the piping structural portion connected to the external piping and effectively limits leakage of the gas flowing in the piping structural portion.
FIG. 1 is a cross-sectional view showing a vacuum pump according to a first embodiment;
FIG. 2 is an enlarged cross-sectional view showing the vicinity of a piping structural portion of the vacuum pump;
FIG. 3 is a cross-sectional view of the vicinity of a piping structural portion of a vacuum pump, showing a first modification of a piping structural portion;
FIG. 4 is a cross-sectional view of the vicinity of a piping structural portion of a vacuum pump, showing a second modification of a piping structural portion;
FIG. 5 is a cross-sectional view of the vicinity of a piping structural portion of a vacuum pump according to a second embodiment;
FIGS. 6A and 6B are cross-sectional views of a position where a bolt is inserted in the vicinity of the piping structural portion of the vacuum pump according to the second embodiment, in which FIG. 6A shows a state before the interior of the piping structural portion has a negative pressure, and FIG. 6B shows a state in which the interior of the piping structural portion has a negative pressure; and
FIG. 7 is a plan view of a vacuum pump showing another application example of a piping structural portion.

Embodiments of the present invention are now described with reference to the drawings. The drawings are not necessarily to scale, and some dimensions may be exaggerated for convenience of explanation. In the description and the drawings, same reference numerals are given to components with substantially the same function and configuration, and the descriptions thereof are omitted.

### First Embodiment

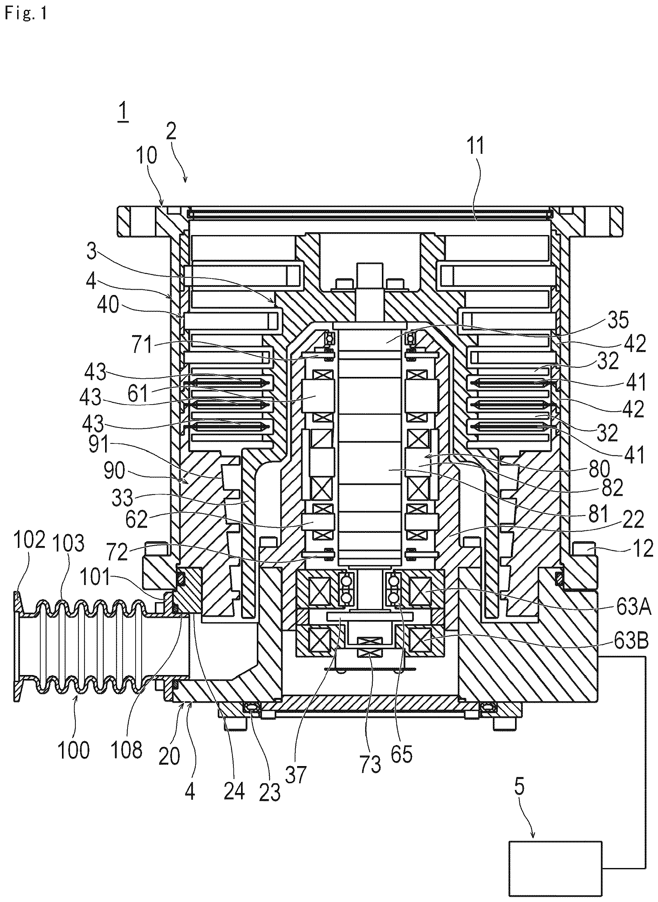

As shown in FIG. 1, a vacuum pump 1 according to a first embodiment of the present invention is a turbomolecular pump that includes a rotor 3, which has rotor blades 32 and rotates at high speed to hit gas molecules to exhaust the gas. The vacuum pump 1 has a vacuum pump main body 2, which draws in and exhausts gas, and a controller 5, which controls the vacuum pump main body 2. The vacuum pump 1 may be used to draw in gas from a chamber of a semiconductor manufacturing apparatus, for example, and exhaust the gas.

The vacuum pump main body 2 includes the rotatable rotor 3, a casing 4 surrounds the rotor 3 in a rotatable manner, and a piping structural portion 100, which is disposed in the casing 4 and forms an outlet port. The vacuum pump main body 2 further includes bearings, which rotatably support the rotor 3, displacement sensors, which detect displacements of the rotor 3, and a motor 80 (driving portion), which drives and rotates the rotor 3.

The casing 4 includes a cylindrical first casing 10 having an inlet port 11, a second casing 20, to which the piping structural portion 100 forming the outlet port is connected, a stator column 22 fixed to the second casing 20, a stator blade portion 40, and a threaded spacer 90.

The first casing 10 is located in the upper part of the vacuum pump main body 2 and has the inlet port 11 formed at its upper end. The first casing 10 is fixed to the second casing 20, which is located at the base of the first casing 10, with bolts 12.

The rotor 3 is rotatably arranged inside the first casing 10. The rotor 3 has a shaft 35, rotor blades 32, which are arranged in multiple stages in the axial direction, and a cylindrical portion 33, which is located downstream of the rotor blades 32. The rotor blades 32 form a turbomolecular pump and perform the suction and exhaustion of gas. In each stage, a plurality of rotor blades 32 are arranged radially in the circumferential direction.

The rotor 3 has a substantially cylindrical shape and the shaft 35, which extends therethrough, is fixed to the inside of the rotor 3. Each rotor blade 32 is inclined at a predetermined angle with respect to a plane perpendicular to the axial direction of the shaft 35 in order to move exhaust gas molecules downward through collision. The rotor blades 32 are integrally formed on the outer circumference surface of the rotor 3. Alternatively, the rotor blades 32 may be fixed to the outer circumference surface of the rotor 3.

The cylindrical portion 33 is arranged downstream of the rotor blades 32 and has the shape of a circular cylinder. The cylindrical portion 33 protrudes toward the inner circumference surface of the threaded spacer 90. The cylindrical portion 33 is adjacent to the inner circumference surface of the threaded spacer 90 with a predetermined gap in between.

The shaft 35 is located at the rotation center of the rotor 3. The shaft 35 has a columnar main shaft portion 36 and a circular disc 37 arranged at the lower section of the main shaft portion 36. The main shaft portion 36 and the disc 37 are made of a high magnetic permeability material (e.g., iron) that can be magnetically attracted. The main shaft portion 36 is attracted by magnetic forces of upstream radial electromagnets 61 and downstream radial electromagnets 62, which will be described below. The position of the main shaft portion 36 is controlled by these magnetic forces.

For example, the bearing may be a magnetic bearing of what is called 5-axis control, which levitates and supports the shaft 35 and controls its position. The bearing includes upstream radial electromagnets 61, which attract the upstream side of the main shaft portion 36, downstream radial electromagnets 62, which attract the downstream side of the main shaft portion 36, axial electromagnets 63A and 63B, which attract the disc 37, and an auxiliary bearing 65. When the axial runout of the rotor 3 increases, the auxiliary bearing 65 comes into contact with the main shaft portion 36, thereby limiting direct contact between the rotor 3 and the stator and resulting damage.

The upstream radial electromagnets 61 include four electromagnets arranged in pairs on each of two orthogonal axes on a plane perpendicular to the rotation axis. The downstream radial electromagnets 62 include four electromagnets arranged in pairs on each of two orthogonal axes on a plane perpendicular to the rotation axis. The axial electromagnets 63A and 63B are positioned to vertically sandwich the disc 37.

The displacement sensors are arranged on the stator column 22 to detect a displacement of the rotor 3. The displacement sensors include upstream radial sensors 71, downstream radial sensors 72, and an axial sensor 73. The upstream radial sensors 71 are four non-contact sensors arranged adjacent to and corresponding to the four upstream radial electromagnets 61. The upstream radial sensors 71 are configured to detect a radial displacement of the upper section of the main shaft portion 36 of the shaft 35 and transmit the displacement signal to the controller 5. Examples of sensors used as the upstream radial sensors 71 include an inductance sensor and an eddy current sensor.

The downstream radial sensors 72 are four non-contact sensors arranged adjacent to and corresponding to the four downstream radial electromagnets 62. The downstream radial sensors 72 are configured to detect a radial displacement of the lower section of the main shaft portion 36 and transmit the displacement signal to the controller 5. Examples of sensors used as the downstream radial sensors 72 include an inductance sensor and an eddy current sensor.

The axial sensor 73 is arranged under the disc 37. The axial sensor 73 is configured to detect an axial displacement of the shaft 35 and transmit the displacement signal to the controller 5.

Based on the signal of the displacement detected by the upstream radial sensors 71, the controller 5 controls the excitation of the upstream radial electromagnets 61 via a compensation circuit having a PID adjustment function to adjust the radial position of the upstream side of the main shaft portion 36. This adjustment is performed independently on each of the two orthogonal axes on a plane perpendicular to the rotation axis.

Also, based on the signal of the displacement detected by the downstream radial sensors 72, the controller 5 controls the excitation of the downstream radial electromagnets 62 via a compensation circuit having a PID adjustment function to adjust the radial position of the downstream side of the main shaft portion 36. This adjustment is performed independently on each of the two orthogonal axes on a plane perpendicular to the rotation axis.

Furthermore, based on the signal of the displacement detected by the axial sensor 73, the controller 5 controls the excitation of the axial electromagnets 63A and 63B. In this control, the axial electromagnet 63A magnetically attracts the disc 37 upward, whereas the axial electromagnet 63B attracts the disc 37 downward. In this manner, by appropriately adjusting the magnetic forces acting on the shaft 35, the magnetic bearing magnetically levitates the shaft 35 and rotatably supports it in a non-contact manner.

The motor 80 includes magnetic poles 81, which are a plurality of permanent magnets arranged on the rotor side, and motor electromagnets 82 arranged on the stator side. The motor electromagnets 82 apply a torque component that rotates the shaft 35 to the magnetic poles 81. The rotor 3 is thus driven and rotated.

Additionally, a rotation speed sensor and a motor temperature sensor (not shown) are attached to the motor 80. The rotation speed sensor and the motor temperature sensor transmit detection results as detection signals to the controller 5. The controller 5 uses the signals received from the rotation speed sensor and the motor temperature sensor to control the rotation of the shaft 35.

The stator blade portion 40 includes multi-stage stators 41 and a plurality of stator spacers 42, which are arranged in stages to sandwich the stators 41 in multiple stages. Each stator 41 has a plurality of stator blades 43.

As with the rotor blades 32, the stator blades 43 are inclined at a predetermined angle with respect to a plane perpendicular to the axial direction of the shaft 35. The stator blades 43 extend inward of the first casing 10 and are arranged in a staggered manner with the stages of the rotor blades 32. The outer circumferential ends of the stator blades 43 are sandwiched between and supported by the ring-shaped stator spacers 42 stacked in multiple stages. The stator spacers 42 are stacked inside the first casing 10. The stator spacers 42 are made of a metal such as aluminum, iron, stainless steel, copper, or an alloy containing these metals as components.

The threaded spacer 90 is arranged between the lower side of the stator spacers 42 and the second casing 20. The threaded spacer 90 is adjacent to the circular cylindrical portion 33 of the rotor 3 with a predetermined gap in between. The inner circumference surface of the threaded spacer 90 has a plurality of helical thread grooves 91. When exhaust gas molecules move in the rotation direction of the rotor 3, these molecules are transferred toward the outlet port in the direction of the helix of the thread grooves 91. The threaded spacer 90 and the cylindrical portion 33 form a thread groove pump. The threaded spacer 90 may be made of a metal such as aluminum, copper, stainless steel, iron, or an alloy containing these metals as components.

The second casing 20 is a disc-shaped member forming the base of the vacuum pump main body 2. The piping structural portion 100 is connected to the second casing 20 under threaded spacer 90. The second casing 20 is typically made of a metal such as iron, aluminum, or stainless steel. Preferably, the second casing 20 physically holds the vacuum pump main body 2 and also functions as a heat conduction path. For this reason, the second casing 20 is preferably made of a metal that is rigid and has high thermal conductivity, such as iron, aluminum, or copper.

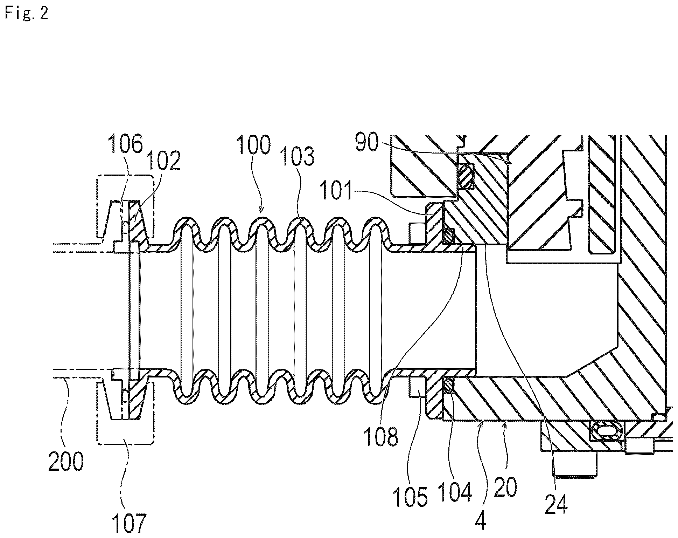

As shown in FIG. 2, the piping structural portion 100 is an outlet port for exhausting exhaust gas to external piping 200. The piping structural portion 100 defines a flow passage through which exhaust gas flows, and is substantially cylindrical as a whole. The piping structural portion 100 is connected to the side wall surface of the second casing 20 of the casing 4 and extends from the second casing 20 in a radial direction of the rotor 3. The piping structural portion 100 includes a main body flange 101 connected to the casing 4, an external flange 102 connected to the external piping 200, a tubular portion 103 between the main body flange 101 and the external flange 102, and a cylinder-shaped portion 108.

The main body flange 101 is fixed to the casing 4 with an O-ring 104 sandwiched in between. The main body flange 101 may be fixed to the casing 4 with bolts 105, but there is no limitation to the fixing method. The O-ring 104 serves to maintain a vacuum inside the piping structural portion 100.

The external flange 102 is located opposite to the main body flange 101 and fixed to a flange of the external piping 200 with a known O-ring 106 having a center ring sandwiched in between, for example. The external flange 102 and the flange of the external piping 200 may be fastened and fixed with a known clamp 107, for example. There is no limitation as to how the external flange 102 is fixed to the flange of the external piping 200, and they may be fixed with bolts, for example.

The tubular portion 103 has a bellows structure and includes an elastic portion that is flexibly deformable. Since the tubular portion 103 has a bellows structure, the tubular portion 103 can elastically expand and contract in the direction of the flow passage of the piping structural portion 100 (a radial direction of the rotor 3) and elastically bend in all directions.

There is no limitation to the material of the piping structural portion 100 as long as the material allows the bellows structure to elastically deform and the main body flange 101 and the external flange 102 to be appropriately attached to the attachment targets. For example, metal materials, such as stainless steel, and polymeric materials, such as polytetrafluoroethylene (PTFE), may be suitably used. When at least the inner surface of the piping structural portion 100 is made of PTFE, the corrosion resistance of the piping structural portion 100 is improved.

The cylinder-shaped portion 108 is a cylindrical section that extends toward the casing 4 beyond the main body flange 101. The cylinder-shaped portion 108 extends into a hole section 24 of the flow passage in the casing 4.

In the vacuum pump main body 2 described above, when the motor 80 drives the shaft 35, the rotor blades 32 and the cylindrical portion 33 rotate. As a result, the rotor blades 32 and the stator blades 43 act to suck exhaust gas from the chamber through the inlet port 11.

The rotor blades 32 and the stator blades 43 transfer the exhaust gas sucked through the inlet port 11 to the second casing 20. At this time, the temperature of the rotor blades 32 rises due to the frictional heat generated when the exhaust gas comes into contact with the rotor blades 32, the conduction of heat generated by the motor 80, and the like. However, this heat is conducted to the stator blades 43 through the radiation or conduction by gas molecules of the exhaust gas, for example. Furthermore, the stator spacers 42 are joined to one another at their outer circumference portions. Thus, the stator spacers 42 conduct the heat received by the stator blades 43 from the rotor blades 32 and the frictional heat generated when the exhaust gas comes into contact with the stator blades 43 to the outside.

Also, the exhaust gas transferred to the second casing 20 is guided to the thread grooves 91 of the threaded spacer 90 and then transferred to the piping structural portion 100 serving as the outlet port. In this embodiment, the threaded spacer 90 is located at the outer circumference of the cylindrical portion 33, and the thread grooves 91 are formed in the inner circumference surface of the threaded spacer 90. However, conversely, thread grooves may be formed in the outer circumference surface of the cylindrical portion 33, and a spacer having a cylindrical inner circumference surface may be arranged around the cylindrical portion 33.

Additionally, to prevent the gas drawn through the inlet port 11 from entering an electrical portion, which includes the motor 80, the downstream radial electromagnets 62, the downstream radial sensors 72, the upstream radial electromagnets 61, the upstream radial sensors 71, and the like, a stator column 22 surrounds the outer circumstance of this electrical portion. The interior of the stator column 22 surrounding the electrical portion is maintained at a predetermined pressure by a purge gas. The second casing 20 includes piping (not shown) through which the purge gas is introduced. The introduced purge gas is sent to the piping structural portion 100 serving as the outlet port through the gap between the auxiliary bearing 65 and the shaft 35, through the motor 80, and the gap between the stator column 22 and the rotor blades 32.

A heater (not shown) and an annular water-cooled tube 23 are wound around the outer circumference of the second casing 20 or the like. A temperature sensor (for example, a thermistor) (not shown) is embedded in the second casing 20. The signal of this temperature sensor is used to perform control to maintain the temperature of the second casing 20 at a constant high temperature (preset temperature) by heating with the heater or cooling with the water-cooled tube 23. This limits the adhesion and accumulation of the process gas within the vacuum pump main body 2.

The process gas may be introduced at a high temperature into the chamber to increase the reactivity. The process gas solidifies at a specific temperature when cooled while being exhausted. This may cause the deposition of products in the exhaust system. Such process gas may be cooled to a low temperature and solidified in the vacuum pump main body 2, thereby adhering to and accumulating on the inside of the vacuum pump main body 2.

For example, when SiCl₄ is used as a process gas in an Al etching apparatus, solid products (for example, AlCl₃) are deposited at a low vacuum (1 × 10⁵ [Pa] to 1 [Pa]) and a low temperature (about 20 [°C]) and accumulate within the vacuum pump main body 2. When process gas deposits accumulate in the vacuum pump main body 2, the accumulation may narrow the pump flow passage and degrade the performance of the vacuum pump main body 2. For example, the above-mentioned products tend to solidify and adhere in areas with low temperatures in the vicinity of the outlet port, particularly near the cylindrical portion 33 and the threaded spacer 90. Thus, based on the signal from the temperature sensor, the controller 5 performs control to maintain the temperature of the second casing 20 at a constant high temperature (preset temperature) by heating with the heater or cooling with the water-cooled tube 23. This limits the adhesion and accumulation of the process gas within the vacuum pump main body 2.

The vacuum pump 1 may suffer trouble during operation, causing the rotor 3 rotating at high speed to collide with a fixed member that is not rotating, such as the stators 41. In this case, the momentum of the rotor 3 is transmitted to the fixed member, instantaneously rotating the entire vacuum pump 1 in the rotation direction of the rotor 3. At this time, since the piping structural portion 100 has the bellows structure that is elastically deformable, the piping structural portion 100 absorbs the positional deviation caused by the rotation. This prevents or reduces the displacement of the external flange 102, which is connected to the external piping 200. As a result, the clamp 107 connecting the external flange 102 to the flange of the external piping 200 is less likely to be damaged, reducing the likelihood of leakage of the exhaust gas in the piping structural portion 100. Additionally, the piping structural portion 100 can absorb displacements in directions other than the rotation direction of the rotor 3. This limits damage to the clamp 107 and leakage of the exhaust gas in the piping structural portion 100 with further effectiveness.

As described above, the vacuum pump 1 according to the first embodiment draws in gas through the inlet port by the rotation of the rotor and includes the casing 4, which rotatably houses the rotor 3, and the piping structural portion 100 disposed in the casing 4. At least a part of the piping structural portion 100 includes an elastic portion that can elastically deform to absorb a displacement.

In the vacuum pump 1 configured as described above, when a positional deviation (mainly a deviation in the rotation direction) occurs due to damage during operation, the bellows structure (the elastic portion) elastically deforms to limit a positional deviation of the section of the piping structural portion 100 connected to the external piping 200. This limits damage to the component connecting the piping structural portion 100 to the external piping 200 and limits leakage of the gas flowing in the piping structural portion 100.

Also, the direction in which the piping structural portion 100 extends from the casing 4 has a directional component in a radial direction of the rotor 3. Thus, when the piping structural portion 100 does not have an elastic portion, a deviation of the vacuum pump 1 in the rotation direction tends to place the section of the piping structural portion 100 connected to the external piping 200 outward in the radial direction of the rotor 3, resulting in a positional deviation. In contrast, when the piping structural portion 100 has an elastic portion, a positional deviation of the section of the piping structural portion 100 connected to the external piping 200 is effectively limited. It should be noted that the direction in which the piping structural portion 100 extends from the casing 4 may be parallel to a radial direction of the rotor 3 or inclined with respect to the radial direction of the rotor 3.

The piping structural portion 100 has the bellows structure. The bellows structure effectively limits a positional deviation of the section of the piping structural portion 100 connected to the external piping 200 and effectively limits leakage of the gas flowing in the piping structural portion 100.

The piping structural portion 100 is the outlet port. Thus, the piping structural portion 100, which is elastically deformable, can effectively limit leakage of the exhaust gas flowing through the piping structural portion 100 serving as the outlet port.

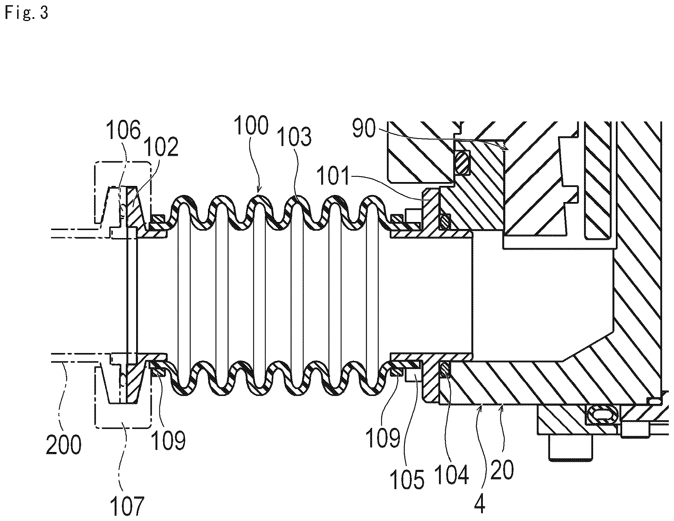

As shown in FIG. 3, in a first modification of the first embodiment, the piping structural portion 100 may be configured such that the main body flange 101 and the external flange 102 are made of a rigid material and the tubular portion 103, which includes the bellows structure and should be elastically deformable, is made of a flexible polymeric material. The rigid material may be a metal material, such as stainless steel, for example. The flexible polymeric material may be polytetrafluoroethylene (PTFE) or silicone rubber, for example. As a material that is flexible and withstands vacuum, a composite material in which a flexible material is reinforced with a wire or the like may be used, for example. When at least the inner surface of the piping structural portion 100 is made of PTFE, the corrosion resistance of the piping structural portion 100 is improved. There is no limitation to the method of joining the main body flange 101 and the external flange 102 to the tubular portion 103. They may be joined using an adhesive, or ring-shaped crimping members 109, which surround the outside of the tubular portion 103, may be used to press the tubular portion 103 onto the main body flange 101 and the external flange 102. The piping structural portion 100 configured as described above still effectively absorbs a deviation of the vacuum pump 1 in the rotation direction by means of the tubular portion 103, which is elastically deformable. With the piping structural portion 100 as described above, the rigid main body flange 101 and the external flange 102 allow for the satisfactory connection to the casing 4 and the external piping 200, and also the flexibility of the tubular portion 103 having the bellows structure is improved.

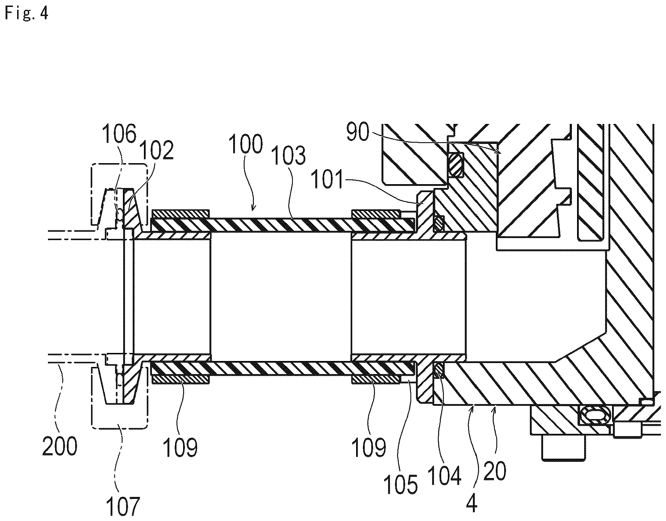

As shown in FIG. 4, in a second modification of the first embodiment, the piping structural portion 100 may be configured such that the main body flange 101 and the external flange 102 are made of a rigid material and the tubular portion 103, which should be elastically deformable, is made of a flexible tubular material. That is, this piping structural portion 100 does not have a bellows structure. The main body flange 101, the external flange 102, and the tubular portion 103 may be made of materials described for the first modification. The piping structural portion 100 configured as described above still effectively absorbs a deviation of the vacuum pump 1 in the rotation direction by means of the tubular portion 103, which is elastically deformable.

### Second Embodiment

A vacuum pump 1 according to a second embodiment differs from the first embodiment only in the structure of a piping structural portion 110. The piping structural portion 100 of the first embodiment has an elastic portion in the piping itself, whereas the piping structural portion 110 of the second embodiment has an elastic portion as a structure separate from piping 120.

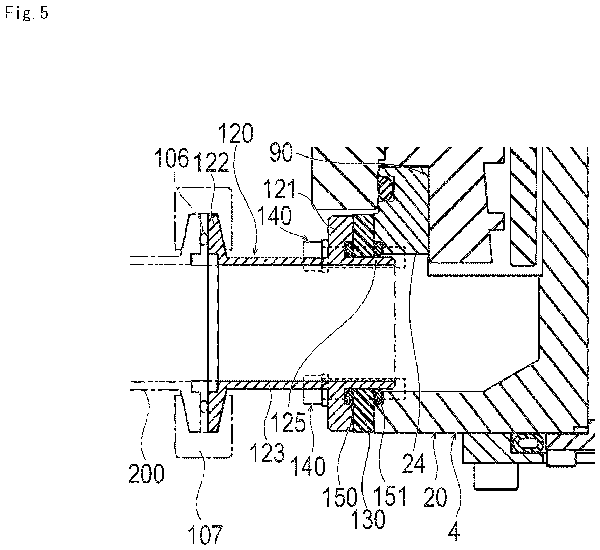

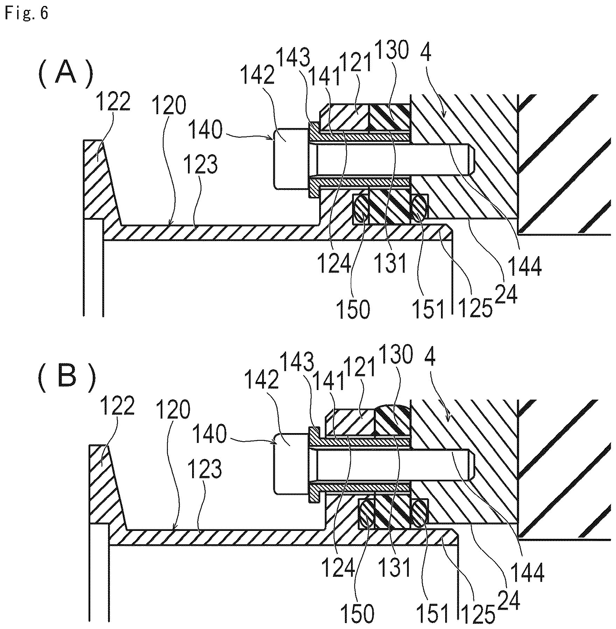

As shown in FIGS. 5 and 6A, the piping structural portion 110 of the second embodiment includes the piping 120, an elastic component 130 (elastic portion) formed by an elastic member, movement restriction portions 140, which restrict the amount of separation of the piping 120 from the casing 4, a first O-ring 150, and a second O-ring 151.

The piping 120 includes a main body flange 121 connected to the casing 4, an external flange 122 connected to the external piping 200, a tubular portion 123 between the main body flange 121 and the external flange 122, and a cylinder-shaped portion 125.

The main body flange 121 is in contact with the elastic component 130 with the first O-ring 150 sandwiched in between. The main body flange 121 has a plurality of through holes 124 through which the movement restriction portions 140 extend. The external flange 122 is located opposite to the main body flange 121 and fixed to a flange of the external piping 200 with an O-ring 106 having a center ring sandwiched in between. The external flange 122 and the flange of the external piping 200 may be fastened and fixed with a clamp 107, for example. There is no limitation as to how the external flange 122 is fixed to the flange of the external piping 200. The tubular portion 123 has the shape of a circular tube and is formed integrally with the main body flange 121 and the external flange 122. The material of the piping 120 may be a metal material, such as stainless steel, but is not limited to this. The cylinder-shaped portion 125 is a cylindrical section that extends toward the casing 4 beyond the main body flange 121. The cylinder-shaped portion 125 extends into the hole section 24 of the flow passage in the casing 4.

The elastic component 130 is a member made of an elastic material and sandwiched between the outer surface of the casing 4 and the surface of the main body flange 121 facing toward the casing 4. The elastic component 130 is in contact with the outer surface of the casing 4 with the second O-ring 151 sandwiched in between. The elastic component 130 has a substantially uniform thickness between the casing 4 and the main body flange 121 and has through holes 131 through which the movement restriction portions 140 extend. The elastic material of the elastic component 130 may be silicone resin, for example, because the elastic component 130 needs to resist corrosion and heat, but is not limited to this. The elastic material of the elastic component 130 is preferably slightly softer than the first and second O-rings 150 and 151. If the elastic material is too soft, the elastic component 130 may fail to compress the first and second O-rings 150 and 151, making it difficult to maintain a negative pressure within the piping structural portion 110. The material of the first and second O-rings 150 and 151 may be a fluoropolymer, for example, but is not limited to this. When the characteristics of the elastic member forming the elastic component 130 include a high longitudinal elastic modulus in the longitudinal direction of the outlet port and a low lateral elastic modulus in the direction perpendicular to this longitudinal direction, the elastic component 130 can easily absorb a bending displacement of the outlet port, that is, a displacement that tilts the piping 120. The first and second O-rings 150 and 151 may be omitted when the elastic component 130 can maintain a negative pressure in the piping structural portion 110.

Each movement restriction portion 140 includes a cylindrical movement restriction sleeve 141 and a movement restriction bolt 142. The movement restriction sleeve 141 extends through a through hole 131 of the elastic component 130 and a through hole 124 of the main body flange 121. There is a clearance between the outer circumference surface of the movement restriction sleeve 141 and the surfaces defining the through hole 131 and the through hole 124. One end of the movement restriction sleeve 141 is in contact with the outer surface of the casing 4, and the opposite end includes a restriction contact portion 143 having a larger outer diameter. The restriction contact portion 143 is in contact with the surface of the main body flange 121 that faces away from the casing 4, and restricts the amount of separation of the piping 120 from the casing 4 to a predetermined range.

The movement restriction bolt 142 extends into and through the movement restriction sleeve 141 from the side farther from the casing 4 and is fixed to a threaded hole 144 formed in the outer surface of the casing 4. The movement restriction bolt 142 thus fixes the movement restriction sleeve 141 to the casing 4.

The first and second O-rings 150 and 151 function to maintain a negative pressure in the piping structural portion 110.

When the vacuum pump 1 operates, the interior of the piping structural portion 110 has a negative pressure. This causes the piping 120 to move toward the outer surface of the casing 4 while deforming the elastic component 130 as shown in FIG. 6B. As a result, the main body flange 121 is separated from the restriction contact portions 143. At this time, each movement restriction sleeve 141 extends through the through holes 131 and 124 with a clearance, so that the piping 120 is flexibly supported by the elastic component 130 and thus permitted to move toward and away from the casing 4. Additionally, the cylinder-shaped portion 125 of the piping 120 at the casing 4 is separated by a slight gap from the inner circumference surface of the hole section 24 of the flow passage in the casing 4. In this state, when the vacuum pump 1 suffers trouble that causes the entire vacuum pump 1 to instantaneously rotate in the rotation direction of the rotor 3, the piping 120, which is supported by the movement restriction portions 140 in a movable manner, can move toward and away from the casing 4 within a predetermined range while deforming the elastic component 130 and can also tilt to absorb movement in the rotation direction. This limits damage to the component that connects the piping structural portion 110 to the external piping 200 and limits leakage of the gas flowing in the piping structural portion 110.

As described above, in the second embodiment, the elastic portion includes the elastic component 130 formed by an elastic member and is sandwiched between the piping 120 of the piping structural portion 110 and the casing 4. Accordingly, the elastic component 130 effectively limits a positional deviation of the section of the piping structural portion 110 connected to the external piping 200 and effectively limits leakage of the gas flowing in the piping structural portion 110.

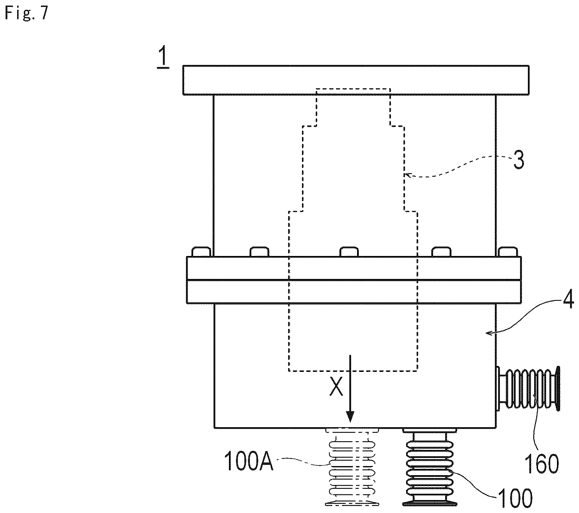

It should be noted that the present invention is not limited to the above-described embodiments, and various modifications can be made by those skilled in the art within the scope of the technical idea of the present invention. For example, as shown in FIG. 7, the piping structural portion 100 having an elastic portion may extend so as to have a component in a direction X parallel to the rotation axis of the rotor 3. Furthermore, the direction in which the piping structural portion 100 extends may be parallel to the direction X or may be inclined. The axial center of the piping structural portion 100 is separated from an extension of the axial center of the rotor 3 in a radial direction of the rotor 3. When such a configuration does not have an elastic portion in the piping structural portion, a deviation of the vacuum pump 1 in the rotation direction tends to cause a positional deviation of the section of the piping structural portion connected to the external piping. In contrast, the piping structural portion 100 that has an elastic portion can effectively limit a positional deviation of the section of the piping structural portion 100 connected to the external piping. FIG. 7 illustrates a piping structural portion 100A by dashed dotted lines. As shown, the central axis of the piping structural portion 100A may be located on an extension of the rotation axis of the rotor 3.

The piping structural portion may be applied to a purge port 160, which supplies a purge gas to the vacuum pump 1, and the same effect can be achieved. Also, the piping structural portion may be applied to a vent port for releasing pressure in the vacuum pump 1, and the same effect can be achieved.

- 1: Vacuum pump
- 3: Rotor
- 4: Casing
- 100, 110: Piping structural portion
- 101, 121: Main body flange
- 102, 122: External flange
- 103, 123: Tubular portion
- 130: Elastic component (elastic portion)
- 200: External piping

## Claims

1. A vacuum pump for drawing in gas through an inlet port by rotation of a rotor, the vacuum pump comprising:
a casing that rotatably houses the rotor; and
a piping structural portion disposed in the casing,
wherein at least a part of the piping structural portion includes an elastic portion configured to elastically deform to absorb a displacement.

2. The vacuum pump according to claim 1, wherein a direction, in which the piping structural portion extends from the casing, has a directional component in a radial direction of the rotor.

3. The vacuum pump according to claim 1, wherein
a direction, in which the piping structural portion extends from the casing, has a directional component in an axial direction of the rotor, and
the piping structural portion has an axial center that is offset from an axial center of the rotor in a radial direction.

4. The vacuum pump according to any one of claims 1 to 3, wherein the piping structural portion has a bellows structure.

5. The vacuum pump according to any one of claims 1 to 3, wherein the elastic portion is constituted of an elastic component formed of an elastic member and is placed to be sandwiched between piping provided in the piping structural portion and the casing.

6. The vacuum pump according to any one of claims 1 to 5, wherein the piping structural portion is an outlet port.

7. The vacuum pump according to any one of claims 1 to 5, wherein the piping structural portion is a purge port.

8. A piping structural portion for a vacuum pump configured to be placed in a casing of the vacuum pump so as to be connected to external piping, wherein at least a part of the piping structural portion includes an elastic portion configured to elastically deform to absorb a displacement.

9. The piping structural portion for a vacuum pump according to claim 8, wherein the piping structural portion has a bellows structure.

10. The piping structural portion for a vacuum pump according to claim 8 or 9, wherein the piping structural portion includes piping and an elastic component formed of an elastic member that is placeable at one end in a direction of a flow passage of the piping.
